# EUROPÄISCHE PATENTSCHRIFT

(11) **EP 2 917 085 B1**
(45) Veröffentlichungstag und Bekanntmachung des Hinweises auf die Patenterteilung: **17.06.2020**
(21) Anmeldenummer: 13789182.6
(22) Anmeldetag: 07.11.2013
(51) Int. Cl.: B60W 40/04, B60W 30/085, B60W 30/08, B60W 30/095

(54) **KRAFTFAHRZEUG UND VERFAHREN ZUM BETRIEB EINES KRAFTFAHRZEUGS**
MOTOR VEHICLE AND METHOD FOR OPERATING A MOTOR VEHICLE
VÉHICULE AUTOMOBILE ET PROCÉDÉ POUR FAIRE FONCTIONNER UN VÉHICULE AUTOMOBILE

(30) Priorität: 10.11.2012 DE 102012022150
(43) Veröffentlichungstag der Anmeldung: 16.09.2015
(73) Patentinhaber: Audi AG, 85045 Ingolstadt (DE)
(72) Erfinder: REICHEL, Michael, 85049 Ingolstadt (DE); BOUZOURAA, Mohamed Essayed, 85051 Ingolstadt (DE)
(74) Vertreter: Thielmann, Frank
(86) Internationale Anmeldenummer: PCT/EP2013/003342
(87) Internationale Veröffentlichungsnummer: WO 2014/072052

(56) Entgegenhaltungen:
- EP-A2- 0 903 714
- DE-A1- 10 133 103
- DE-A1- 10 329 567
- DE-A1-102005 048 562
- DE-B3-102005 051 805

## Beschreibung

Die Erfindung betrifft ein Kraftfahrzeug, umfassend wenigstens eine Steuereinrichtung, eine Wärmebildkamera und eine Bildverarbeitungseinrichtung, wobei die Bildverarbeitungseinrichtung zum Erkennen von Objekten auf einem Wärmebild der Wärmebildkamera ausgebildet ist, wobei die Bildverarbeitungseinrichtung zur Ermittlung von mindestens einer Objekteigenschaft mindestens eines erkannten Objektes durch Auswertung der Wärmeverteilung im Wärmebild in einem das erkannte Objekt umfassenden Bereich ausgebildet ist, wobei die Steuereinrichtung zur Nutzung der Objekteigenschaft bei dem Betrieb eines Fahrzeugsystems ausgebildet ist.

Fahrassistenzsysteme, die Sicherheits- und Komfortfunktionen zur Verfügung stellen, gewinnen in modernen Kraftfahrzeugen zunehmend an Bedeutung. Um diesen Fahrassistenzsystemen ausreichend die Umgebung betreffende Daten zur Verfügung zu stellen, gewinnt auch die Sensorik in Kraftfahrzeugen zunehmend an Bedeutung. Vor allen Dingen in der Oberklasse sind inzwischen zunehmend Wärmebildkameras in Kraftfahrzeugen vorhanden. Hier werden generell zwei Systeme verwendet. Zum einen kommen aktive Wärmebildkameras zum Einsatz, bei denen das Sichtfeld der Kamera mit Infrarotlicht ausgeleuchtet wird. Ein solches System stellt ähnliche Bildinformationen zur Verfügung, wie sie auch durch eine normale Kamera aufgenommen werden können, bzw. wie sie auch der Fahrer direkt sieht. Der Vorteil einer solchen Kamera ist, dass eine ähnliche Ausleuchtung der Umgebung, wie bei Beleuchtung mit Fernlicht, vorgenommen werden kann, ohne dass Fahrer entgegenkommender Fahrzeuge geblendet werden.

Alternativ werden häufig auch passive Infrarotkameras eingesetzt. Bei diesen Kameras wird ausschließlich die von Objekten abgestrahlte Infrarotstrahlung aufgenommen. Die Stärke dieser Kameras ist es, Tiere oder Personen auf der Fahrbahn zu erkennen. In Serienfahrzeugen werden auch schon Systeme eingesetzt, die Fußgänger erkennen und bei Bewegung eines Fußgängers in Richtung der Fahrbahn oder des Fahrzeugs Warnsignale geben können.

Aus der Druckschrift EP 0 903 714 A2 ist ein Verfahren zur Vermeidung von Konfliktsituationen im Straßenverkehr bekannt, wobei durch eine Einrichtung ein Abbild der Umgebung des Kraftfahrzeugs erfasst wird. Bei einer Kollision mit anderen besetzten Fahrzeugen kann zur Schadensabschätzung die Sitzbelegung des Kollisionsfahrzeugs mittels einer Kamera erfasst und bei der Kollisionsstrategie mitberücksichtigt werden.

Ein Fahrer-Assistenzsystem mit Hervorhebung relevanter Personen im Infrarotbild ist aus der Druckschrift DE 10 2005 048 562 A1 bekannt. Anhand einer Wärmebildkamera werden Infrarotbilder erfasst und dort ein Mensch, ein Tier, ein Hindernis und/oder ein Zweirad hervorgehoben.

Die Druckschrift DE 10 2005 051 805 B3 lehrt zur Unterstützung eines Fahrers in Gefahrenbereichen Umgebungsinformationen einer Umgebungssensorik auszuwerten. Hierbei können Kameras, Radare, Lidar und Infrarotsensoren zur Umgebungserfassung eingesetzt werden und aus den fusionierten Sensordaten können Informationen bezüglich einer Objektart, Position, Orientierung und Bewegungsgeschwindigkeit ermittelt werden.

Ein Verfahren zur Messung und Nachbildung einer von einer Person subjektiv wahrgenommenen Umgebung ist aus DE 101 33 103 A1 bekannt. Hierbei wird ein multisensorisches integriertes Messsystem genutzt, um simultan verschiedene Messsignale zu erfassen.

Die Druckschrift DE 103 29 567 A1 lehrt ein Verfahren zur Verringerung eines Verletzungsrisikos von Fahrzeuginsassen bei einem Unfall. Hierbei ist eine Objekterkennungseinrichtung vorgesehen, die erkennt, ob sich ein weiteres Fahrzeug quer zur Bewegungsrichtung des eigenen Fahrzeugs bewegt.

Der Erfindung liegt daher die Aufgabe zugrunde, ein Kraftfahrzeug mit demgegenüber verbesserter Auswertung von Sensorinformationen einer Infrarotkamera anzugeben.

Zur Lösung dieser Aufgabe ist bei einem Kraftfahrzeug der eingangs genannten Art erfindungsgemäß vorgesehen, dass die Objekteigenschaft oder eine der Objekteigenschaften eines als das erkannte Objekt erkannten Fahrzeugs die Position eines Motors und/oder mindestens einer Batterie ist.

Der Erfindung liegt die Idee zugrunde, dass nach erfolgter Erkennung eines Objekts weitere Informationen gewonnen werden können, indem die Verteilung von Wärme an dem Objekt und im Bereich um das Objekt ausgewertet wird. Häufig beruhen Objekterkennungsalgorithmen auf Kanten bzw. Konturerkennung. In diesem Fall werden hauptsächlich scharfe Kontraste genutzt. Eine kontinuierliche Veränderung, beispielsweise eine Wärmeverteilung, wird nicht genutzt. Eine solche Untersuchung der Wärmeverteilung ist insbesondere bei Objekten vorteilhaft, die sich aus vielen verschiedenen Teilen stark unterschiedlicher Wärme zusammensetzen. Dies ist beispielsweise bei Kraftfahrzeugen der Fall.

Anhand einer solchen Wärmeverteilung kann die Position bzw. das Vorhandensein von bestimmten Teilen eines Objekts erkannt werden. Da das Objekt selbst bereits zuvor erkannt wurde, kann hier bereits die Art des Objekts genutzt werden. Wird beispielsweise ein Mensch erkannt, so kann gezielt versucht werden, einzelne Gliedmaßen zu erkennen. Wird hingegen ein Kraftfahrzeug erkannt, so kann beispielsweise versucht werden, einen Motor, Abgase oder einen Auspuff zu erkennen. Dieses Verfahren kann selbstverständlich auch gemeinsam mit anderen Sensoren genutzt werden. So kann beispielsweise der Umriss eines Kraftfahrzeugs aufgrund eines Videobildes ermittelt werden, und die Position einzelner heißer Teile, wie beispielsweise des Auspuffs, anschließend durch die Wärmebildkamera. Es ist auch möglich, einen abstandsmessenden Sensor, insbesondere einen Ultraschallsensor zu nutzen, um den Abstand eines Objektes zu bestimmen. Da damit eine Skalierung des Objekts bekannt ist, ist die anschließende Bilderkennung vereinfacht.

Eine Ermittlung weiterer Objekteigenschaften kann große Vorteile bieten. Im einfachsten Fall kann es möglich sein, Informationen, die bereits durch ein anderes Sensorsystem erhalten wurden, durch die Auswertung der Wärmeverteilung zu bestätigen. Damit gewinnt die erhaltene Information und damit das im Kraftfahrzeug vorhandene Umgebungsmodell an Robustheit. Es können aber, wie später noch genauer beschrieben, auch Informationen gewonnen werden, die eine bessere Voraussage des Verhaltens anderer Verkehrsteilnehmer erlauben. Insbesondere das zukünftige Verhalten von zum Zeitpunkt der Detektion stehenden Kraftfahrzeugen kann besser vorausgesagt werden. Beispielsweise kann eine wahrscheinliche Fahrtrichtung nach der Anfahrt durch eine ermittelte Reifenstellung vorhergesagt werden, oder es kann ermittelt werden ob der Motor in Betrieb ist und damit ein Anfahren zu erwarten ist.

Insbesondere im Rahmen der Unfallvermeidung bzw. der Minimierung maximaler Verletzungsschweren ist ein besseres und robusteres Umgebungsmodell nützlich. Die durch das erfindungsgemäße Verfahren erlangten, genaueren Informationen über die Bewegung anderer Fahrzeuge können durch entsprechende Fahrzeugsysteme, insbesondere durch Längs- bzw. Querführende Fahrzeugsysteme, zur verbesserten Unfallvermeidung genutzt werden. Zudem erlaubt ein besseres Umgebungsmodell, insbesondere im Bezug auf weitere Fahrzeuge mit denen eine Kollision droht, eine exaktere Crashprognose, wodurch eine bessere Steuerung der Sicherheitssysteme eines Kraftfahrzeugs erfolgen kann. So können im Fall eines nicht mehr zu vermeidenden Unfalls zusätzliche Informationen über die Region eines weiteren Kraftfahrzeugs gewonnen werden, mit der eine Kollision voraussichtlich erfolgt. So kann als eine Objekteigenschaft die Verformbarkeit eines Karosserieabschnitts oder eines anderen erkannten Bauteils wesentlich besser abgeschätzt werden. Diese Information kann dann zur adaptiven Ansteuerung von Sicherheitssystemen, insbesondere Insassenrückhaltesystemen, genutzt werden, um beispielsweise die Auslösezeitpunkte von Airbags anzupassen. Es ist auch möglich, dass bei einer bevorstehenden unvermeidbaren Kollision durch Beeinflussung einer Vielzahl von Fahrzeugsystemen, wie beispielsweise Bremsen, Federung oder Steuerung, die Trajektorie des Kraftfahrzeugs so beeinflusst wird, dass die Schwere der Kollision minimal ist. Auch in diesem Fall ist die Ermittlung und Nutzung einer Verformbarkeitsinformation vorteilhaft. Auch die Ermittlung von Kollisionsregionen, die besondere Gefahren bergen, ist vorteilhaft. In diesem Fall kann ein Fahrzeugsystem potentiell auf den Crashvorgang einwirken, um eine Kollision mit dieser Fahrzeugregion zu vermeiden.

Es ist möglich, dass eine weitere der Objekteigenschaften eine Objektausrichtung ist. In diesem Fall kann beispielsweise die Fahrtrichtung des erkannten Fahrzeugs festgestellt werden. Dies ist vor allem in Situationen sinnvoll, in denen das erkannte Fahrzeug sich nur sehr langsam bewegt oder vorübergehend steht. Verfahren, die auf der Detektion von Bewegung beruhen, können in diesem Fall keine Aussage über die Bewegungsrichtung treffen. Das erfindungsgemäße Verfahren kann jedoch die Vorderseite des erkannten Fahrzeugs erkennen und damit voraussagen, in welche Richtung sich das Fahrzeug voraussichtlich bewegen wird. Vor allen Dingen an Kreuzungen oder Ampeln können damit weitere Fahrzeuge klar dem Gegenverkehr oder dem seitlichen Verkehr zugeordnet werden. Zudem ermöglicht die Feststellung der Ausrichtung eines erkannten Fahrzeugs die Plausibilität anderer Sensorsignale zu prüfen.
Vorzugsweise kann die Bildverarbeitung zur Ermittlung der Objektausrichtung des erkannten Kraftfahrzeugs durch Ermittlung der Position mindestens eines Auspuffs und/oder des Motors des erkannten Fahrzeugs relativ zur Position des erkannten Fahrzeugs ausgebildet sein. Motor und Auspuff eins Kraftfahrzeugs sind besonders warm. Zudem sind im Bereich des Auspuffs auch warme Abgase vorhanden. Diese Objekte strahlen stark im infraroten Bereich und sind damit gut abbildbar. Demgegenüber sind große Teile des Kraftfahrzeugs deutlich kühler. Damit ist eine klare Erkennung dieser Baugruppen möglich.

Es ist auch möglich, dass eine der Objekteigenschaften des erkannten Fahrzeugs die Form des Auspuffs und/oder die Menge und/oder Form der abgegebenen Abgase ist, und die Bildverarbeitungseinrichtung zur Bewertung der Fahrleistung des erkannten Fahrzeugs aus diesen Daten ausgebildet ist. Es kann für Fahrassistenzsysteme, beispielsweise bei der Anfahrt an einer Ampel vorteilhaft sein, die Fahrleistung anderer Fahrzeuge abschätzen zu können. Leistungsstarke Kraftfahrzeuge haben in jeder Fahrsituation einen höheren Verbrauch und damit auch einen höheren Abgasausstoß als vergleichbare leistungsschwache Kraftfahrzeuge. Eine solche größere Menge Abgas kann von einer Infrarotkamera detektiert werden. Zusätzlich kann noch Information über die Menge und Größe der Auspuffe gewonnen werden. Während diese Daten alleine höchstens als Indiz für eine Leistungsfähigkeit eines Kraftfahrzeugs gesehen werden können, können sie Informationen aus anderen Teilen der Umfeldsensorik bestätigen oder widerlegen.

Beim erfindungsgemäßen Kraftfahrzeug ist es auch möglich, dass eine Objekteigenschaft oder eine der Objekteigenschaften eine Form und/oder Größe des Objekts ist. Gerade bei Dunkelheit, Regen oder Schnee können Probleme bei der Kantenerkennung durch eine konventionelle Kamera auftreten. Bei Dunkelheit und bei Beleuchtung mit Scheinwerfern kann die Kantenerkennung von Objekten zudem durch Schlagschatten erschwert sein. Während die Bilder einer passiven Infrarotkamera in der Regel geringer aufgelöst sind, können sie vor allem in Kombination mit anderen Sensordaten genutzt werden, um eine robustere Kanten- und Größenabschätzung zu erreichen. Vor allen Dingen nachts und bei Regen oder Schnee sind viele Objekte wärmer als die Umgebung und können damit mit einer Infrarotkamera gut abgebildet werden. Auch Schlagschatten, die bei einer Abbildung des Fahrzeugumfelds im sichtbaren Bereich bei der Bildauswertung kaum von echten Kanten zu unterscheiden sind, sind im Bild einer passiven Infrarotkamera nicht problematisch, da hier nicht mit einer aktiven Beleuchtung gearbeitet wird.

Eine Objekteigenschaft oder eine der Objekteigenschaften des erkannten Fahrzeugs kann auch eine Art des Antriebs sein, wobei insbesondere Verbrennungsantriebe durch das Vorhandensein von mindestens einem Auspuff oder von Abgasen und Elektroantriebe durch Vorhandensein von Batterien erkannt werden.

Auspuffe aber auch Batterien von Elektrofahrzeugen oder Hybridfahrzeugen sind im Fahrbetrieb merklich wärmer als das sonstige Fahrzeugumfeld. Die größere Wärme von Hybrid- oder Elektrofahrzeugbatterien gegenüber der Batterie eines Kraftfahrzeugs mit Verbrennungsantrieb ist eine Folge der größeren Leistungsabgabe dieser Batterien. Damit sind diese Batterien wärmer und besser im Infrarotbild zu erkennen. Zudem nehmen Batterien in einem Elektrofahrzeug oder Hybridfahrzeug wesentlich mehr Raum ein. Damit kann in vielen Fällen eine Unterscheidung zwischen Fahrzeugen mit Verbrennungsmotor, Elektromotor oder Hybridfahrzeugen getroffen werden. Dies kann für viele Fahrassistenzsysteme hilfreich sein. Zum einen haben Fahrzeuge mit Elektromotor in vielen Fahrsituation ein deutlich anderes Fahrverhalten. So können vor allen Dingen bei niedrigen Geschwindigkeiten wesentlich höhere Beschleunigungen erzielt werden. Andererseits ist die Information, dass es sich um ein Elektrofahrzeug handelt auch aus Sicherheitsaspekten wichtig. In Elektro- und Hybridfahrzeugen werden häufig Lithium-lonen-Akkumulatoren eingesetzt. Werden diese beschädigt, so besteht die Gefahr, dass Wasser eindringt. In diesem Fall kann es zu einer starken Erhitzung des Akkumulators mit Brand- und Verpuffungsgefahr kommen. Daher kann ein Fahrassistenzsystem im Falle einer drohenden Kollision versuchen, das Fahrzeug so zu bremsen, bzw. zu steuern, dass eine Beschädigung der Batterien vermieden wird. Lithium-Ionen-Akkumulatoren am Unfallort stellen zusätzliche Gefahrenquellen dar. Daher ist es auch möglich, dass die Steuereinrichtung nach einer Kollision des erkannten Kraftfahrzeugs zur Ansteuerung eines Anzeigemittels zur Anzeige eines Hinweises auf die Art des Antriebs des erkannten Fahrzeuges ausgebildet ist. Damit ist also eine Information des Fahrers möglich, bevor er beispielsweise Unfallhilfe leistet.

Es ist zudem vorteilhaft, wenn eine der Objekteigenschaften des erkannten Fahrzeugs ein Betriebszustand, insbesondere der Betrieb eines Motors ist, der durch das Vorhandensein von Abgasen und/oder die Temperatur von Motor und/oder Batterien erkannt wird. Die Informationen über den Betriebszustand anderer Kraftfahrzeuge erlauben eine bessere Beurteilung der Verkehrssituation. So kann beispielsweise frühzeitig erkannt werden, dass ein parkendes Fahrzeug seinen Motor anlässt. Dies weist bereits früh daraufhin, dass ein Ausscheren aus einer Parklücke möglich ist. Andererseits kann eine solche Erkennung des Betriebszustandes beispielsweise auch bei der Parkplatzsuche in einem Parkhaus genutzt werden. Läuft bei einem in einer Parklücke stehenden Kraftfahrzeug der Motor, so besteht eine höhere Wahrscheinlichkeit, dass diese Parklücke frei wird. Auch in Staus, an Ampeln und an Kreuzungen kann das Erkennen des Betriebszustands nützlich sein. Dies ist vor allem der Fall, wenn das Kraftfahrzeug mit einer Start-Automatik ausgerüstet ist und die Steuereinrichtung zur Steuerung der Start-Automatik in Abhängigkeit des Betriebszustands eines Motors des erkannten Fahrzeugs ausgebildet ist. Hier kann beispielsweise an einer Ampel der Motor ausgeschaltet werden, und der Start des Motors kann vom Betriebszustand des Motors des Vordermanns abhängig gemacht werden.

Um die Bewegungen anderer Verkehrsteilnehmer besser voraussagen zu können, ist es vorteilhaft, wenn eine der Objekteigenschaften des erkannten Fahrzeugs die Stellung und/oder Position mindestens eines Rades ist, das aufgrund einer Fahrt des erkannten Fahrzeugs erwärmt ist. Eine Erkennung der Position der Räder kann Informationen über eine Orientierung des erkannten Fahrzeugs geben und/oder bestätigen. Es ist jedoch auch möglich, die Stellung von Rädern zu erkennen. Dies erlaubt eine Voraussage über die zukünftige Bewegung des erkannten Fahrzeugs. Vor allem bei stehenden Fahrzeugen oder sehr langsamer Bewegung der Fahrzeuge ist dies mit anderen Verfahren sehr schwierig.

Des Weiteren kann eine Objekteigenschaft oder eine der Objekteigenschaften des erkannten Fahrzeugs die Position eines Fußpunktes des mindestens eines Rades sein. Die Erkennung des Fußpunktes des Rades ist relativ einfach möglich, da Rad und Straße in der Regel deutlich unterschiedliche Temperaturen haben. Aus der Position des Fußpunktes und des Rades lässt sich der Abstand zum erkannten Kraftfahrzeugs berechnen. Im einfachsten Fall wird hier davon ausgegangen, dass sich das erkannte Fahrzeug auf der gleichen Höhe befindet wie das erfindungsgemäße Kraftfahrzeug. Wird jedem Pixel der Infrarotkamera ein Raumwinkel zugeordnet, der durch diesen Pixel abgebildet wird, und wird der Nullpunkt am mittleren Pixel gewählt, so entsprechen weiter vom Mittelpunkt entfernt unter diesem liegende Pixel größeren Raumwinkeln zwischen Kamera und Fußpunkt des Fahrzeugs, was wieder bedeutet, dass das Fahrzeug näher ist. Befindet sich das erkannte Kraftfahrzeug auf einer anderen Höhe als das erfindungsgemäße Kraftfahrzeug, so kann nicht direkt ein Abstand berechnet werden, es ist jedoch möglich, falls ein Abstand bekannt ist, eine Höheninformation zu errechnen, bzw. falls eine Höheninformation bekannt ist einen Abstand zu berechnen. Sind beispielsweise Höheninformationen aus einer hoch auflösenden Karte in Verbindung mit GPS-Informationen verfügbar, kann eine Entfernung berechnet werden.

Insbesondere ist es bei einer drohenden Kollision vorteilhaft, dass die Objekteigenschaft oder eine der Objekteigenschaften des erkannten Fahrzeugs die Position eines Motors und/oder mindestens einer Batterie ist. Bei Erkennen einer bevorstehenden Kollision mit einem weiteren Fahrzeug ist es zudem möglich, dass die Steuereinrichtung zur Steuerung eines Fahreingriffs und/oder mindestens eines Sicherheitssystems unter Berücksichtigung mindestens einer ermittelten Objekteigenschaft ausgebildet ist. Die Sicherheitssysteme von Kraftfahrzeugen sind häufig komplex und steuern eine Vielzahl von Einzelsystemen, wie das Auslösen bzw. den Auslösezeitpunkt von Airbags oder Gurtstraffern, Anpassungen der Lenkung, selektives Bremsen oder Anpassungen am Fahrwerk. Ziel all dieser Systeme ist selbstverständlich zunächst die Unfallvermeidung. Daher findet bei den meisten Fahrassistenzsystemen ein mehrstufiges Verfahren statt, bei dem zunächst Warnsysteme aktiviert werden, in einer weiteren Stufe unterstützend gebremst oder gesteuert wird und in der letzten Stufe versucht wird die Kollision in einer Weise zu erreichen, in der vor allem der Personenschaden möglichst klein ist. Die Funktions- und Leistungsfähigkeit dieser Systeme hängt entscheidend von der Qualität des Umgebungsmodells ab, das im Kraftfahrzeug vorhanden ist. Daher ist es offensichtlich, dass möglichst eine Vielzahl von Informationen von einer Vielzahl von Sensoren gesammelt werden soll, um diese Funktionen zum einen robuster gegen Fehler, zum anderen leistungsfähiger zu machen. Beim erfindungsgemäßen Kraftfahrzeug kann eine Vielzahl von Objektinformationen, vor allem über das oder die weiteren an der Kollision beteiligten Kraftfahrzeuge bereitgestellt werden, insbesondere auch im Rahmen einer Datenfusion bei weiteren Sensoren. Insbesondere kann die mindestens eine ermittelte Objekteigenschaft zur Steuerung des Fahreingriffs und/oder des Sicherheitssystems Element der Gruppe Objektausrichtung, Form, Größe, Fahrleistung, Entfernung, Position des Motors, Position von mindestens einer Batterie und Position leicht zu verformender Teile des Objekts sein.

Es ist daher auch möglich, dass eine der Objekteigenschaften des erkannten Fahrzeugs die Position von Bereichen ist, die bei einer Kollision zur kleinsten maximalen Verletzungsschwere von Fahrzeuginsassen führt, und die Steuereinheit bei rechnerisch unvermeidlicher Kollision zur Steuerung des Kraftfahrzeugs zur Kollision mit diesen Bereichen ausgebildet ist, wobei die Ermittlung dieser Bereiche zumindest eine Erkennung von Bereichen, die bei einer Kollision zu einer hohen maximalen Verletzungsschwere führen, wie Batterie oder Motor, durch Erkennen thermischer Signaturen und/oder eine Erkennung von leicht verformbaren Bereichen unter Berücksichtigung der Materialtemperatur umfasst.

Verletzungen bei Unfällen werden meist durch plötzliche Beschleunigungen, Quetschungen oder Feuer verursacht. Um plötzliche Beschleunigungen oder Quetschungen zu vermeiden ist es wichtig, dass bei einer Kollision versucht wird, kontinuierliche niedrige Beschleunigungen auf Fahrzeug und Körper auszuüben. Es sollte also eine Kollision mit sehr schweren und starren Teilen vermieden werden. Ein schweres und starres Teil ist der Motor. Auch eine Entzündung von Fahrzeugen kann zu wesentlich schwereren Unfallfolgen führen. Wie bereits erwähnt besteht vor allem bei Lithium-Ionen- Akkumulatoren bei Beschädigung eine starke Brand- oder Verpuffungsgefahr. Daher sollte wenn möglich auch eine Kollision mit einem Fahrzeugbereich, der Batterien umfasst, vermieden werden.

Insbesondere bei nicht allzu schweren Unfällen kann es vorteilhaft sein, mit besonders leicht verformbaren Teilen der Karosserie eines weiteren Fahrzeuges zu kollidieren. Neben dem Material, mit dem die Kollision stattfindet, kann auch die Temperatur des Materials einen Einfluss auf dessen Steifigkeit haben. Insbesondere bei Kunststoffen, aber auch bei Metallen, kann es daher vorteilhaft sein, besonders warme Bereiche zu erkennen, da diese leicht verformbar sind.

Zudem betrifft die Erfindung auch ein Verfahren zum Betrieb eines eine Wärmebildkamera, eine Bildverarbeitungseinrichtung sowie eine Steuereinrichtung aufweisenden Kraftfahrzeugs, umfassend die Schritte:
- Aufnahme eines Wärmebilds durch die Wärmebildkamera,
- Erkennen eines Objekts, insbesondere eines Fahrzeugs, auf dem Wärmebild durch die Bildverarbeitungseinrichtung,
   Ermittlung mindestens einer Objekteigenschaft durch die Bildverarbeitungseinrichtung durch Auswertung der Wärmeverteilung im Wärmebild in einem das Objekt umfassenden Bereich,
- Nutzung der Objekteigenschaft durch die Steuereinrichtung bei dem Betrieb mindestens eines Fahrzeugsystems,
wobei die Objekteigenschaft oder eine der Objekteigenschaften eines als das erkannte Objekt erkannten Fahrzeugs die Position eines Motors und/oder mindestens einer Batterie ist.

Die im Bezug auf das Kraftfahrzeug offenbarten Ausbildungen der Objekteigenschaft und der betriebenen Fahrzeugsysteme können auch zur Weiterbildung des Verfahrens herangezogen werden.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Darstellung eines erfindungsgemäßen Kraftfahrzeugs,
- Fig. 2: ein Ausführungsbeispiel zur Erkennung von Objekteigenschaften anhand einer Rückansicht eines Kraftfahrzeugs mit Verbrennungsmotor,
- Fig. 3: ein Ausführungsbeispiel zur Erkennung von Objekteigenschaften anhand einer Vorderansicht eines Kraftfahrzeugs, und
- Fig. 4: ein Ausführungsbeispiel zur Erkennung von Objekteigenschaften anhand einer Seitenansicht eines Elektrofahrzeugs.

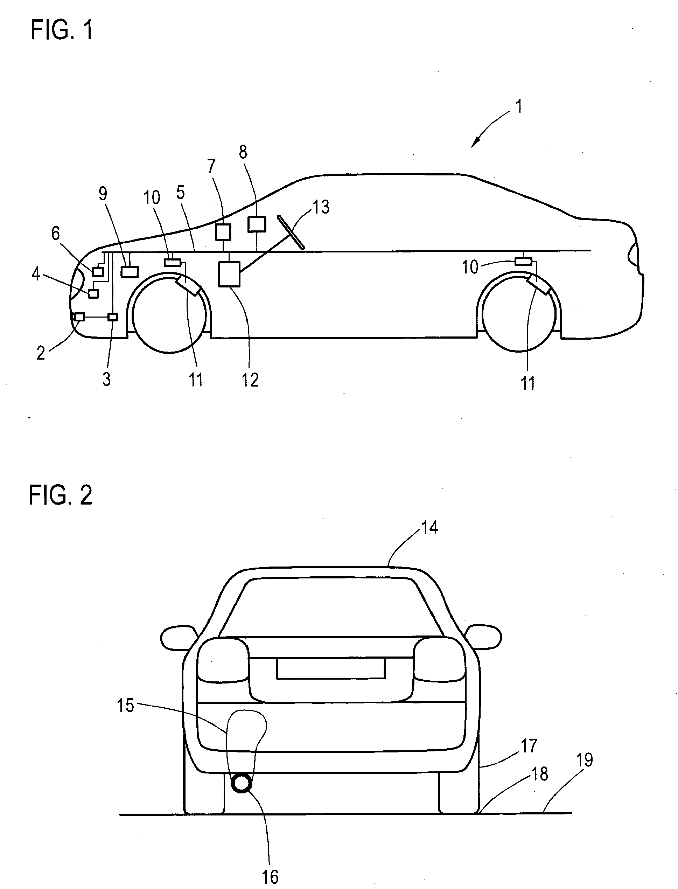

Fig. 1 zeigt eine schematische Darstellung eines Kraftfahrzeugs. Das Kraftfahrzeug 1 umfasst eine Infrarotkamera 2 sowie eine Bildverarbeitungseinrichtung 3, die die Daten der Infrarot-Kamera 2 verarbeite. Die Bildverarbeitungseinrichtung 3 erfüllt hier zwei Aufgaben. Zum einen werden in einem ersten Schritt Objekte erkannt, zum anderen in einem zweiten Schritt Eigenschaften von Objekten ermittelt, indem die Wärmeverteilung im Wärmebild in einem das erkannte Objekt umfassenden Bereich ausgewertet wird. Das Kraftfahrzeug 1 ist zudem mit weiteren Sensoren 4 sowie den Sensoren zugeordneten Datenverarbeitungseinheiten ausgerüstet. Über einen CAN-Bus 5 kann ein Datenaustausch zwischen den weiteren Sensoren 4 bzw. den zugeordneten Datenverarbeitungseinrichtungen und der Bildverarbeitungseinrichtung 3 stattfinden. Damit können unter anderem der Bildverarbeitungseinrichtung 3 Informationen der Bilderkennung einer Kamera, die im sichtbaren Bereich arbeitet, zur Verfügung gestellt werden. Genauso ist es umgekehrt möglich, dass Bilder der Infrarot-Kamera 2 und die aus diesen gewonnenen Informationen aus der Bildverarbeitungseinrichtung 3 zur Auswertung der Daten der weiteren Sensoren 4 genutzt werden. Verschiedene Arten der Sensor- und Informationsfusion sind denkbar.

Die Objekterkennung selbst basiert auf einer Kantendetektion. Damit werden in diesem Schritt vor allem scharfe Übergänge im Bild zum Informationsgewinn genutzt. Ist ein Objekt erkannt, so kann unter Benutzung der Informationen über den erkannten Objekttyp eine weitere Erkennung von inneren Strukturen des Objekts bzw. weiteren Informationen über das Objekt stattfinden. Es ist auch möglich, Informationen aus einem weiteren Sensor 4, beispielsweise einer im optischen Bereich arbeitenden Kamera zu nutzen, um die Wärmevorteilung am Objekt mit der erkannten Form des Objekts mit der optischen Kamera zu vergleichen. Die erkannten Objekteigenschaften werden von der Bildverarbeitungseinrichtung 3 über den CAN-Bus 5 an eine Steuereinrichtung 6 übermittelt. Diese kann eine Vielzahl von Steueraufgaben durchführen. Das Bild der Infrarot-Kamera 2 kann über den CAN-Bus 5 auch an ein Anzeigemittel 7 im Fahrzeuginnenraum übertragen werden. Stellt das Anzeigemittel 7 ein Bild der Infrarot-Kamera 2 dar, so kann dieses durch die Steuereinrichtung 6 mit weiteren Informationen, die durch die Bildverarbeitungseinrichtung 3 gewonnen wurden, ergänzt werden. So ist es möglich, den Betriebszustand von erkannten Kraftfahrzeugen, ihre Ausrichtung, den Abstand zu erkannten Objekten und die Art des Antriebs eines erkannten Kraftfahrzeugs anzuzeigen. Die auf dem Anzeigesystem 7 angezeigten Informationen können über Bedienelemente 8 ausgewählt werden. Diese sind als Bildschirm mit Softkeys und ein Drehdrücksteller ausgebildet. Neben der reinen Anzeige von Zusatzinformationen werden auch mehrere Fahrzeugsysteme direkt gesteuert. Das Kraftfahrzeug 1 ist mit einer Start-Stopp-Automatik ausgestattet. Wird, nach Aktivieren der Stopp-Automatik, beispielsweise an einer Ampel, ein Wechsel des Betriebszustands eines vor dem Kraftfahrzeug stehenden weiteren Kraftfahrzeuges von dem Betriebszustand eines ausgeschalteten Motors zu einem Betriebszustand eines eingeschalteten Motors festgestellt, wird automatisch von der Bildverarbeitungseinrichtung 3 über den CAN-Bus 5 an die Zündung 9 ein Steuersignal zum Starten des Motors gesendet. Somit ist ein zügiges Anfahren trotz Start-Stopp-Automatik sichergestellt.

Die Steuereinheit 6 stellt zudem eine Vielzahl von Fahrassistenzsystemen wie Längsführungs- und Querführungssysteme zur Verfügung. Auch diese Fahrassistenzsysteme können die durch die Bildverarbeitungseinrichtung 3 ermittelten Objekteigenschaften von erkannten Objekten nutzen. So ist mit Erkennung dieser zusätzlichen Objekteigenschaften eine bessere Erkennung von Gegenverkehr sowie Seitenverkehr durch Erkennung der Kraftfahrzeugausrichtung möglich. Auch kann, vor allem bei stehendem Verkehr in Staus, an Ampeln oder an Kreuzungen leichter zwischen aktiven Verkehrsteilnehmern und parkenden Fahrzeugen unterschieden werden.

Die von der Bildverarbeitungseinrichtung 3 ermittelten Objekteigenschaften werden auch für zahlreiche Sicherheitssysteme genutzt. Zur Unfallvermeidung, bzw. Reduzierung von Unfallfolgen, wird ein Kollisionsschutzsystem, umfassend in Bremsassistenzsystem 10 zur Steuerung der Bremsen 11 sowie ein Steuerungsassistenzsystem 12 zur Anpassung der Steuerung, bei Erkennen einer Kollisionsgefahr durch die Daten der weiteren Sensoren 4 bzw. der Infrarot-Kamera 2 durch die Steuereinrichtung 6 über den CAN-Bus 5 so angesteuert, dass ein drohender Unfall vermieden wird, bzw. dessen Folgen für die Insassen der Kraftfahrzeuge minimal sind. Die Bildverarbeitungseinrichtung 3 der Infrarot-Kamera 2 stellt hierfür eine Vielzahl von zusätzlichen Objektinformationen zur Verfügung. So kann zum einen die Verkehrssituation durch Zusatzinformationen über Objektausrichtung, Form, Größe, Fahrleistung und Entfernung von erkannten Objekten durch die Fahrassistenzsysteme der Steuereinrichtung 6 besser beurteilt werden. Zum anderen können Bereich erkannter Kraftfahrzeuge ermittelt werden, die bei einer Kollision mit diesen Bereichen eine besonders große oder besonders kleine maximale Verletzungsschwere, oder bei ohnehin zu erwartender kleiner Verletzungsschwere eine besonders leichte oder schwere Beschädigung des Kraftfahrzeugs, erwarten lassen. Eine besonders große maximale Verletzungsschwere, und schwere Beschädigung des Kraftfahrzeugs wird vor allem bei einer Kollision mit starren und trägen Teilen, wie z. B. dem Motor, sowie mit Teilen, die zu einer Brandgefahr, wie beispielsweise Batterien, führen, erwartet. Die erwartete Verletzungsschwere, sowie der Kollisionsschaden kann, vor allem bei nicht zu hohen Kollisionsgeschwindigkeiten verringert werden, wenn die Kollision mit leicht verformbaren Teilen des anderen Kraftfahrzeugs erfolgt. Hier kann auch die Temperatur von Fahrzeugteilen berücksichtigt werden, da vor allem bei Kunststoffteilen, die Verformbarkeit mit steigender Temperatur merklich zunimmt. Nach Erkennung solcher Bereiche durch die Bildverarbeitungseinrichtung 3 können diese Bereiche über den CAN-Bus 5 an die Steuereinrichtung 6 übermittelt werden, die mit Hilfe dieser Informationen das Bremsassistenzsystem 10 zur Steuerung der Bremsen 11 sowie das Steuerungsassistenzsystem 12 zur Anpassung der Steuerung 13 so ansteuert, dass im Falle einer unvermeidbaren Kollision, die Kollision mit den zuvor ermittelten Bereichen kleiner maximaler Verletzungsschwere erfolgt.

Das Kraftfahrzeug 1 weist zudem eine Vielzahl von Sicherheitssystemen (nicht gezeigt), wie beispielsweise Insassenrückhaltesysteme, auf. Über den CAN-Bus 5 kann die Steuereinrichtung 6 das Verhalten der Sicherheitssysteme bei Unfällen abhängig von einer Crashprognose beeinflussen. Damit ist eine adaptive Ansteuerung der Sicherheitssysteme möglich. Auch hier können Informationen, die mithilfe der Bildverarbeitungseinrichtung 3 aus den Daten der Infrarotkamera 2 gewonnen werden, genutzt werden. So kann bei der Ansteuerung der Sicherheitssysteme beispielsweise eine ermittelte Information über das Verformungsverhalten eines Bereichs eines anderen Fahrzeugs, mit dem eine Kollision droht, berücksichtigt werden.

Fig. 2 zeig ein Ausführungsbeispiel zur Erkennung von Objekteigenschaften eines vorausfahrenden Kraftfahrzeugs 14 mit Verbrennungsmotor. Das Fahrzeug selbst wird entweder durch die Infrarot-Kamera 2 oder durch die Verwendung weiterer Sensoren 4, wie z. B. einer Videokamera, erkannt. Durch die Infrarotkamera 2 können besonders Bereiche des erkannten Kraftfahrzeugs 14, deren Temperatur oberhalb der Umgebungstemperatur liegt, besonders gut erkannt werden. Dies sind bei einem vorausfahrenden Fahrzeug 14 mit Verbrennungsmotor die Abgase 15, der Auspuff 16 sowie die Hinterräder 17. Vor allem bei Regen, Schnee oder Dunkelheit kann auch die Kontur des erkannten Kraftfahrzeugs 14 mit Hilfe der Infrarot-Kamera 2 besser erkannt werden. Aus der Kontur des erkannten Kraftfahrzeugs 14 sowie der Position der Räder 17, des Auspuffes 16 und der Abgase 15 lässt sich leicht erkennen, dass das erkannte Kraftfahrzeug von hinten zu sehen ist und damit dem eigenen Kraftfahrzeug voranfährt. Diese Erkennung der Ausrichtung ist vor allen Dingen in Situationen wichtig, in denen das Kraftfahrzeug 14 steht, also z. B. an Kreuzungen. Am Vorhandensein von Abgas 15 ist auch klar zu erkennen, dass der Motor des Kraftfahrzeugs 14 läuft. Damit kann schon aus einiger Entfernung festgestellt werden, ob ein Kraftfahrzeug 14 aufgrund einer Verkehrssituation vorübergehend steht, oder ob das Fahrzeug 14 parkt.

Die erkannten Räder 17 können auch zur Abstandsbestimmung genutzt werden. Der Fußpunkt 18 des Rades 17 ist leicht zu erkennen, da es der Übergangspunkt zwischen Rad 17 und Straße 19 ist. Die Position des Fußpunktes 18 des Rades 17 ist im Bild der Infrarot-Kamera 2 klar einer Gruppe von Pixeln zuordenbar. Da jeder Pixel der Infrarot-Kamera 2 einem Raumwinkel entspricht, ist die Position des Fußpunktes 18 auf einem gewissen Raumwinkel festlegbar. Ist nun die Höhe des Fußpunktes 18 bekannt, so kann damit der Abstand zwischen dem Fußpunkt 18 und dem eigenen Kraftfahrzeug 1 bestimmt werden. Wird festgestellt, dass sich das Fahrzeug 14 auf der gleichen Höhe wie das eigene Kraftfahrzeug 1 befindet, so ist die Höhe der fahrzeugeigenen Infrarot-Kamera 2 gegenüber dem Fußpunkt 18 bekannt und die Entfernung kann berechnet werden. Besteht ein Höhenunterschied zwischen dem erkannten und dem eigenen Kraftfahrzeug, so ist eine Entfernungsberechnung nicht ohne weiteres möglich. Sind aber Höheninformationen, z. B. aus Kartenmaterial, bekannt, so kann die Entfernung wiederum berechnet werden. Ist die Entfernung zum erkannten Kraftfahrzeug 14 anderweitig bekannt, so kann aus der Position des Fußpunktes 18 eine Höheninformation bestimmt werden. Damit werden weitere Informationen über den Fahrbahnverlauf gewonnen, die zur Steuerung weiterer Fahrzeugsysteme genutzt werden.

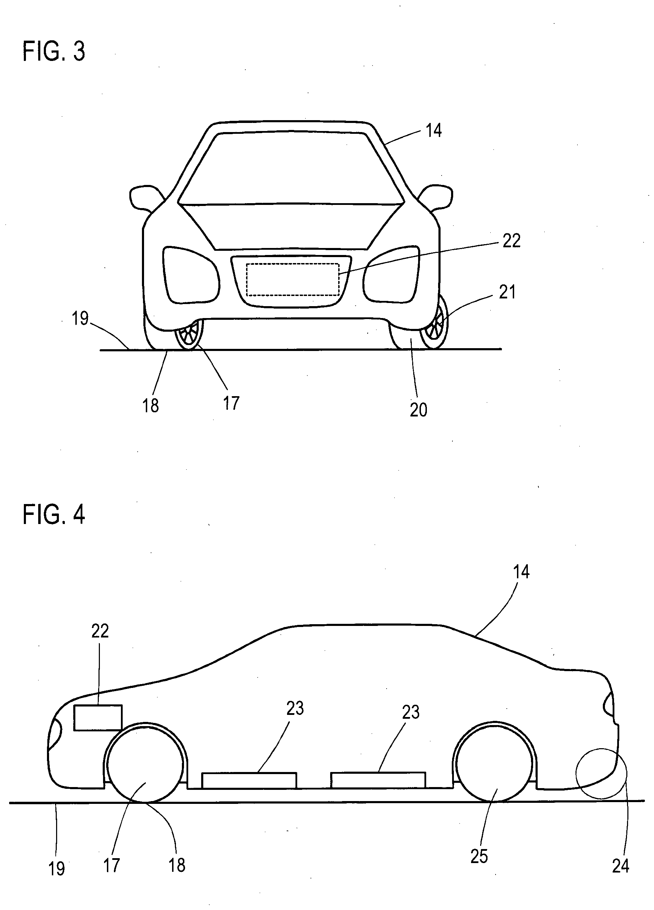

Fig. 3 zeigt schematisch eine Vorderansicht eines erkannten Kraftfahrzeugs 14. Auch hier sind im Bild der Infrarot-Kamera 2 vor allem warme Teile des Kraftfahrzeugs 14 zu erkennen. Dies sind neben der Kontur des Kraftfahrzeugs 14 vor allem der Motorblock 22 sowie die Räder 17, hier vor allem der Mantel 20. Bei den Rädern 17 kann auch ein Lenkeinschlag erkannt werden, da die Felge 21 in der Regel merklich kühler ist, als der Mantel 20. Werden eingeschlagene Räder 17 erkannt, so ist dies ein Indiz, dass es sich um Vorderräder handelt. Aus der Kontur des erkannten Kraftfahrzeugs 14, dem Erkennen von eingeschlagenen Vorderrädern 17, sowie dem erkannten Motorblock 22 kann eine hohe Wahrscheinlichkeit bestimmt werden, dass es sich um ein entgegenkommendes Fahrzeug 14 handelt. Ein warmer Mantel 20 des Rades 17 sowie ein warmer Motorblock 22 führen auch zu einer hohen Wahrscheinlichkeit, dass es sich nicht um parkendes Fahrzeug handelt. Somit kann, vor allem in Situationen, in denen das erkannte Fahrzeug 14 steht, erkannt werden, dass es sich um einen aktiven Verkehrsteilnehmer handelt, dass das erkannte Kraftfahrzeug 14 sich beim Anfahren voraussichtlich nach rechts bewegen wird und dass es entgegenkommend ist. Aus der Position des Fußpunkts 18, also dem Übergang zwischen dem Rad 17 und der Straße 19, kann wie im vorgegangen Beispiel wiederum ein Abstand ermittelt werden. Bei einer drohenden Kollision kann sowohl der Radeinschlag zur Voraussage der Bewegung des erkannten Fahrzeugs 14, als auch die Position des Motorblocks 22 zum Erreichen einer Kollision mit kleinster maximaler Verletzungsschwere und/oder geringsten Schaden genutzt werden. Daneben ist auch eine Anpassung des Auslösezeitpunkts von Sicherheitssystemen, insbesondere von Insassenrückhaltesystemen wie Airbags oder Gurtstraffern, beispielsweise abhängig von der Position des Motorblocks 22, möglich.

Fig. 4 ist eine schematische Seitenansicht eines erkannten Kraftfahrzeugs 14 mit Elektromotor. Durch die erkannten Reifen 17 sowie die Kontur des erkannten Kraftfahrzeugs 14 kann ermittelt werden, dass das erkannte Fahrzeug 14 seitlich zu sehen ist. Bei einer seitlichen Ansicht sollte bei einem Fahrzeug 14 mit Verbrennungsmotor im Bereich 24 ein Auspuff zu sehen sein, sowie Abgase. Da sich beim erkannten Fahrzeug 14 in diesem Bereich keine auffällig warmen Objekte befinden, handelt es sich entweder um ein parkendes Fahrzeug oder ein Elektrofahrzeug. Eine erhöhte Temperatur des Motorblocks 22 sowie der Batterien 23 weist jedoch darauf hin, dass es sich nicht um ein parkendes Fahrzeug handelt. Auch die erkannten Batterien 23 zeigen mit hoher Wahrscheinlichkeit, dass es sich um ein Elektro-, oder Hybridfahrzeug handelt. Auch hier ist eine Bestimmung des Abstandes durch Ermittlung des Fußpunktes 18 zwischen Rad 17 und Straße 19 möglich. Zu einer Voraussage der Bewegungsrichtung, vor allem bei stehendem Fahrzeug 14, kann die abgebildete Form des Rades 17, dass in der Regel gelenkt wird, mit der Form des Hinterrades 25 verglichen werden. Hier sind beide Räder 17 und 25 gleich geformt, was auf eine Geradeausfahrt des Kraftfahrzeugs 14 hinweist. Sollte in diesem Fall eine Kollision mit dem erkannten Kraftfahrzeug 14 unvermeidbar sein, so kann mit den durch die Bildverarbeitungseinrichtung 3 der Infrarot-Kamera 2 erhaltenen Zusatzinformationen durch die Steuereinrichtung 6 versucht werden, eine Beschädigung der Batterien 23 und damit zusätzliche Gefahren zu vermeiden. Dies ist vor allem wesentlich, da die Position von Batterien 23 in Elektro- und Hybridfahrzeugen verschieden sein kann. Damit ist eine Ermittlung der Batterieposition aus der Fahrzeugkontur nicht möglich. Es muss also eine direkte Bestimmung der Batterieposition erfolgen.

## Patentansprüche

1. Kraftfahrzeug (1), umfassend wenigstens eine Steuereinrichtung (6), eine Wärmebildkamera (2) und eine Bildverarbeitungseinrichtung (3), wobei die Bildverarbeitungseinrichtung (3) zum Erkennen von Objekten auf einem Wärmebild der Wärmebildkamera (2) ausgebildet ist, wobei die Bildverarbeitungseinrichtung (3) zur Ermittlung von mindestens einer Objekteigenschaft mindestens eines erkannten Objektes durch Auswertung der Wärmeverteilung im Wärmebild in einem das erkannte Objekt umfassenden Bereich ausgebildet ist, wobei die Steuereinrichtung (6) zur Nutzung der Objekteigenschaft bei dem Betrieb eines Fahrzeugsystems (10, 12) ausgebildet ist,
**dadurch gekennzeichnet,**
**dass** die Objekteigenschaft oder eine der Objekteigenschaften eines als das erkannte Objekt erkannten Fahrzeugs (14) die Position eines Motors (22) und/oder mindestens einer Batterie (23) ist.

2. Kraftfahrzeug nach Anspruch 1,
**dadurch gekennzeichnet,**
**dass** eine weitere der Objekteigenschaften eine Objektausrichtung ist.

3. Kraftfahrzeug nach Anspruch 2,
**dadurch gekennzeichnet,**
**dass** die Bildverarbeitungseinrichtung (3) zur Ermittlung der Objektausrichtung des erkannten Fahrzeugs (14) durch Ermittlung der Position mindestens eines Auspuffs (16) und/oder des Motors (22) des erkannten Fahrzeugs (14) relativ zur Position des erkannten Fahrzeugs (14) ausgebildet ist.

4. Kraftfahrzeug nach einem der vorangehenden Ansprüche,
**dadurch gekennzeichnet,**
**dass** eine der Objekteigenschaften des erkannten Fahrzeugs (14) die Form des Auspuffs (16) und/oder die Menge und/oder Form der abgegebenen Abgase (15) ist, und die Bildverarbeitungseinrichtung (3) zur Bewertung der Fahrleistung des erkannten Fahrzeugs (14) aus diesen Daten ausgebildet ist.

5. Kraftfahrzeug nach einem der vorangehenden Ansprüche,
**dadurch gekennzeichnet,**
**dass** eine der Objekteigenschaften eine Form und/oder Größe eines Objektes ist.

6. Kraftfahrzeug nach einem der vorangehenden Ansprüche,
**dadurch gekennzeichnet,**
**dass** eine der Objekteigenschaften des erkannten Fahrzeugs (14) eine Art des Antriebs ist, wobei insbesondere Verbrennungsantriebe durch das Vorhandensein von mindestens einem Auspuff (16) oder von Abgasen (15) und Elektroantriebe durch Vorhandensein von Batterien (23) erkannt werden.

7. Kraftfahrzeug nach Anspruch 6,
**dadurch gekennzeichnet,**
**dass** die Steuereinrichtung (6) nach einer Kollision des erkannten Kraftfahrzeugs (14) zur Ansteuerung eines Anzeigemittels (7) zur Anzeige eines Hinweises auf die Art des Antriebs des erkannten Fahrzeugs (14) ausgebildet ist.

8. Kraftfahrzeug nach einem der vorangehenden Ansprüche,
**dadurch gekennzeichnet,**
**dass** eine der Objekteigenschaften des erkannten Fahrzeugs (14) ein Betriebszustand, insbesondere der Betrieb eines Motors (22), ist, der durch das Vorhandensein von Abgasen (15) und/oder die Temperatur von Motor (22) und/oder Batterien (23) erkannt werden kann.

9. Kraftfahrzeug nach Anspruch 8,
**dadurch gekennzeichnet,**
**dass** die Steuereinrichtung (6) zur Steuerung einer Startautomatik in Abhängigkeit des Betriebszustandes eines Motors (22) des erkannten Fahrzeugs (14) ausgebildet ist.

10. Kraftfahrzeug nach einem der vorangehenden Ansprüche,
**dadurch gekennzeichnet,**
**dass** eine der Objekteigenschaften des erkannten Fahrzeugs (14) die Stellung und/oder Position mindestens eines Rades (17) ist, das aufgrund einer Fahrt des erkannten Fahrzeugs (14) erwärmt ist.

11. Kraftfahrzeug nach Anspruch 10,
**dadurch gekennzeichnet,**
**dass** eine der Objekteigenschaften des erkannten Fahrzeugs (14) die Position eines Fußpunktes (18) des mindestens einen Rades (17) ist.

12. Kraftfahrzeug nach Anspruch 11,
**dadurch gekennzeichnet,**
**dass** eine der Objekteigenschaften eine Entfernung des erkannten Fahrzeugs (14) ist, wobei die Bildverarbeitungseinrichtung (3) zur Ermittlung der Entfernung aus der Position des Fußpunkts (18) des mindestens einen Rades (17) ausgebildet ist.

13. Kraftfahrzeug nach einem der vorangehenden Ansprüche,
**dadurch gekennzeichnet,**
**dass** die Steuerungseinrichtung (6) bei Erkennung einer bevorstehenden Kollision mit einem weiteren Fahrzeug zur Steuerungen eines Fahreingriffs und/oder mindestens eines Sicherheitssystems unter Berücksichtigung mindestens einer ermittelten Objekteigenschaft ausgebildet ist.

14. Kraftfahrzeug nach Anspruch 13,
**dadurch gekennzeichnet,**
**dass** die mindestens eine ermittelte Objekteigenschaft zur Steuerung des Fahreingriffs und/oder des Sicherheitssystems Element der Gruppe Objektausrichtung, Form, Größe, Fahrleistung, Entfernung, Position eines Motors (22), Position von mindestens einer Batterie (23) und Position leicht zu verformender Teile des Objekts ist.

15. Kraftfahrzeug nach einem Anspruch 13 oder 14,
**dadurch gekennzeichnet,**
**dass** eine der Objekteigenschaften des erkannten Fahrzeugs (14) die Position von Bereichen ist, die bei einer Kollision zur kleinsten maximaler Verletzungsschwere von Fahrzeuginsassen führt, und die Steuereinrichtung (6) bei rechnerisch unvermeidlicher Kollision zur Steuerung des Kraftfahrzeugs (1) zur Kollision mit diesen Bereichen ausgebildet ist, wobei die Ermittlung dieser Bereiche zumindest eine Erkennung von Bereichen, die bei einer Kollision zu einer hohen maximalen Verletzungsschwere führen, wie Batterien (23) oder Motor (22), durch Erkennung thermischer Signaturen und/oder eine Erkennung von leicht verformbaren Bereichen unter Berücksichtigung der Materialtemperatur umfasst.

16. Verfahren zum Betrieb eines eine Wärmebildkamera (2), eine Bildverarbeitungseinrichtung (3) sowie eine Steuereinrichtung (6) aufweisenden Kraftfahrzeugs, umfassend die Schritte:
- Aufnahme eines Wärmebilds durch die Wärmebildkamera (2),
- Erkennen eines Objekts auf dem Wärmebild durch die Bildverarbeitungseinrichtung (3),
- Ermittlung mindestens einer Objekteigenschaft durch die Bildverarbeitungseinrichtung (3) durch Auswertung der Wärmeverteilung im Wärmebild in einem das Objekt umfassenden Bereich,
- Nutzung der Objekteigenschaft durch die Steuereinrichtung (3) bei dem Betrieb mindestens eines Fahrzeugsystems (10, 12),
wobei die Objekteigenschaft oder eine der Objekteigenschaften eines als das erkannte Objekt erkannten Fahrzeugs (14) die Position eines Motors (22) und/oder mindestens einer Batterie (23) ist.

17. Verfahren nach Anspruch 16,
**dadurch gekennzeichnet,**
**dass** eine weitere der Objekteigenschaften eine Objektausrichtung ist.

## Claims

1. Motor vehicle (1), comprising at least one control device (6), a thermal imaging camera (2) and an image processing device (3), wherein the image processing device (3) is designed to recognise objects on a thermal image from the thermal imaging camera (2), wherein the image processing device (3) is designed to ascertain at least one object property of at least one recognised object by evaluating the thermal distribution in the thermal image in a region that comprises the recognised object, wherein the control device (6) is designed to use the object property for operation of a vehicle system (10, 12),
**characterised in**
**that** the object property or one of the object properties of a recognised vehicle (14) as the recognised object is the position of an engine (22) and/or at least one battery (23).

2. Motor vehicle according to claim 1,
**characterised in**
**that** another of the object properties is an object orientation.

3. Motor vehicle according to claim 2,
**characterised in**
**that** the image processing device (3) is designed to ascertain the object orientation of the recognised vehicle (14) by ascertaining the position of at least one exhaust pipe (16) and/or the engine (22) of the recognised vehicle (14) relative to the position of the recognised vehicle (14).

4. Motor vehicle according to any of the preceding claims,
**characterised in**
**that** one of the object properties of the recognised vehicle (14) is the shape of the exhaust pipe (16) and/or the quantity and/or form of the emitted exhaust gases (15), and the image processing device (3) is designed to assess the driving performance of the recognised vehicle (14) from this data.

5. Motor vehicle according to any of the preceding claims,
**characterised in**
**that** one of the object properties is a shape and/or size of an object.

6. Motor vehicle according to any of the preceding claims,
**characterised in**
**that** one of the object properties of the recognised vehicle (14) is the type of drive, wherein, in particular, combustion engine drives are recognised by the presence at least one exhaust pipe (16) or exhaust gases (15) and electric drives by the presence of batteries (23).

7. Motor vehicle according to claim 6,
**characterised in**
**that** the control device (6) is designed to control a means of display (7), following a collision involving the recognised vehicle (14), in order to display information on the type of drive of the recognised vehicle (14).

8. Motor vehicle according to any of the preceding claims,
**characterised in**
**that** one of the object properties of the recognised vehicle (14) is an operating status, in particular the operation of an engine (22), which can be recognised by the presence of exhaust gases (15) and/or the temperature of the engine (22) and/or batteries (23).

9. Motor vehicle according to claim 8,
**characterised in**
**that** the control device (6) is designed to control a starting device depending on the operating status of an engine (22) of the recognised vehicle (14).

10. Motor vehicle according to any of the preceding claims,
**characterised in**
**that** one of the object properties of the recognised vehicle (14) is the status and/or position of at least one wheel (17), which is heated due to travel by the recognised vehicle (14).

11. Motor vehicle according to claim 10,
**characterised in**
**that** one of the object properties of the recognised vehicle (14) is the position of a base point (18) of the at least one wheel (17).

12. Motor vehicle according to claim 11,
**characterised in**
**that** one of the object properties is a distance of the recognised vehicle (14), wherein the image processing device (3) is designed to ascertain the distance from the position of the base point (18) of the at least one wheel (17).

13. Motor vehicle according to any of the preceding claims,
**characterised in**
**that** the control device (6) is designed, on recognising an imminent collision with another vehicle, to control a driver intervention and/or at least a safety system, by taking account of at least one ascertained object property.

14. Motor vehicle according to claim 13,
**characterised in**
**that** the at least one ascertained object property for controlling the driver intervention and/or the safety system is an element of the group including object orientation, shape/form, size, driving performance, distance, position of an engine (22), position of at least one battery (23) and position of easily deformed parts of the object.

15. Motor vehicle according to any of claims 13 or 14,
**characterised in**
**that** one of the object properties of the recognised vehicle (14) is the position of regions, which result in the lowest maximum severity of injuries to vehicle occupants in a collision, and the control device (6) is designed, in a mathematically unavoidable collision, to control the motor vehicle (1) to collide with these regions, wherein ascertaining these regions comprises at least a recognition of regions, which result in a high maximum severity of injuries in a collision, such as batteries (23) or engines (22), by recognising thermal signatures and/or recognising easily deformed regions, by taking account of the material temperature.

16. Method for operating a vehicle having a thermal imaging camera (2), an image processing device (3) as well as a control device (6), comprising the steps of:
- Recording a thermal image by the thermal imaging camera (2),
- Recognising an object on the thermal image by the image processing device (3),
- Ascertaining at least one object property by the image processing device (3) by evaluating the thermal distribution in the thermal image in a region that comprises the object,
- Use of the object property by the control device (3) for operation of at least one vehicle system (10, 12),
wherein the object property or one of the object properties of a recognised vehicle (14) as the recognised object is the position of an engine (22) and/or at least one battery (23).

17. Method according to claim 16,
**characterised in**
**that** another of the object properties is an object orientation.

## Revendications

1. Véhicule automobile (1) qui comporte au moins un dispositif de commande (6), une caméra thermique (2) et un dispositif de traitement d'images (3), le dispositif de traitement d'images (3) étant configuré pour détecter des objets sur une image thermique de la caméra thermique (2), le dispositif de traitement d'images (3) étant configuré pour déterminer au moins une propriété d'objet d'au moins un objet détecté en évaluant la répartition de la chaleur dans l'image thermique dans une zone qui comprend l'objet détecté, le dispositif de commande (6) étant configuré pour utiliser la propriété d'objet pour faire fonctionner un système de véhicule (10, 12).
**caractérisé en ce que**
la propriété d'objet ou l'une des propriétés d'objet d'un véhicule détecté (14) comme objet détecté est la position d'un moteur (22) et/ou d'au moins une batterie (23).

2. Véhicule automobile selon la revendication 1, **caractérisé en ce qu'**une autre des propriétés d'objet est une orientation d'objet.

3. Véhicule automobile selon la revendication 2,
**caractérisé en ce que**
le dispositif de traitement d'images (3) est configuré pour déterminer l'orientation d'objet du véhicule détecté (14) en déterminant la position d'au moins un échappement (16) et/ou du moteur (22) du véhicule détecté (14) par rapport à la position du véhicule détecté (14).

4. Véhicule automobile selon l'une quelconque des revendications précédentes,
**caractérisé en ce que**
l'une des propriétés d'objet du véhicule détecté (14) est la forme de l'échappement (16) et/ou la quantité et/ou la forme des gaz d'échappement émis (15), et le dispositif de traitement d'images (3) est configuré pour évaluer la performance de conduite du véhicule détecté (14) à partir de ces données.

5. Véhicule automobile selon l'une quelconque des revendications précédentes,
**caractérisé en ce que**
l'une des propriétés d'objet est la forme et/ou la taille d'un objet.

6. Véhicule automobile selon l'une quelconque des revendications précédentes,
**caractérisé en ce que**
l'une des propriétés d'objet du véhicule détecté (14) est un type d'entraînement, en particulier les entraînements à combustion étant détectés par la présence d'au moins un échappement (16) ou de gaz d'échappement (15) et les entraînements électriques étant détectés par la présence de batteries (23).

7. Véhicule automobile selon la revendication 6,
**caractérisé en ce que**
après une collision du véhicule automobile détecté (14), le dispositif de commande (6) est configuré pour activer un moyen d'affichage (7) permettant d'afficher une indication du type d'entraînement du véhicule détecté (14).

8. Véhicule automobile selon l'une quelconque des revendications précédentes,
**caractérisé en ce que**
l'une des propriétés d'objet du véhicule détecté (14) est un état de fonctionnement, en particulier le fonctionnement d'un moteur (22), qui peut être détecté par la présence de gaz d'échappement (15) et/ou la température du moteur (22) et/ou de batteries (23).

9. Véhicule automobile selon la revendication 8,
**caractérisé en ce que**
le dispositif de commande (6) est configuré pour commander un démarrage automatique en fonction de l'état de fonctionnement d'un moteur (22) du véhicule détecté (14).

10. Véhicule automobile selon l'une quelconque des revendications précédentes,
**caractérisé en ce que**
l'une des propriétés d'objet du véhicule reconnu (14) est l'emplacement et/ou la position d'au moins une roue (17) qui est chauffée en raison d'un déplacement du véhicule détecté (14).

11. Véhicule automobile selon la revendication 10,
**caractérisé en ce que**
l'une des propriétés d'objet du véhicule détecté (14) est la position d'un point de base (18) d'au moins une roue (17).

12. Véhicule automobile selon la revendication 11,
**caractérisé en ce que**
l'une des propriétés d'objet est une distance du véhicule détecté (14), le dispositif de traitement d'images (3) étant configuré pour déterminer la distance par rapport à la position du point de base (18) de l'au moins une roue (17).

13. Véhicule automobile selon l'une quelconque des revendications précédentes,
**caractérisé en ce que**
lorsqu'une collision imminente avec un autre véhicule est détectée, le dispositif de commande (6) est configuré pour commander une intervention de conduite et/ou au moins un système de sécurité en tenant compte d'au moins une propriété d'objet déterminée.

14. Véhicule automobile selon la revendication 13,
**caractérisé en ce que**
l'au moins un objet déterminé servant à commander l'intervention de conduite et/ou le système de sécurité est un élément sélectionné à partir du groupe orientation d'objet, forme, taille, performance de conduite, distance, position d'un moteur (22), position d'au moins une batterie (23) et position des parties facilement déformables de l'objet.

15. Véhicule automobile selon la revendication 13 ou 14,
**caractérisé en ce que**
l'une des propriétés d'objet du véhicule détecté (14) est la position des zones qui, en cas de collision, entraînent la plus petite gravité maximale des blessures des occupants du véhicule, et le dispositif de commande (6) est configuré pour commander le véhicule automobile (1) afin qu'il entre en collision avec ces zones en cas de collision arithmétiquement inévitable, la détermination de ces zones comprenant au moins une détection des zones qui entraînent une gravité maximale élevée des blessures en cas de collision, telles que les batteries (23) ou le moteur (22), par la détection de signatures thermiques et/ou une détection des zones facilement déformables en tenant compte de la température du matériau.

16. Procédé pour faire fonctionner un véhicule automobile comprenant une caméra thermique (2), un dispositif de traitement d'images (3) et un dispositif de commande (6), comprenant les étapes consistant à :
enregistrer une image thermique par la caméra thermique (2),
détecter un objet sur l'image thermique par le dispositif de traitement d'images (3),
déterminer au moins une propriété d'objet par le dispositif de traitement d'images (3) en évaluant la répartition de la chaleur dans l'image thermique dans une zone comprenant l'objet,
utiliser la propriété d'objet par le dispositif de commande (3) dans le fonctionnement d'au moins un système de véhicule (10, 12),
la propriété d'objet ou l'une des propriétés d'objet d'un véhicule détecté (14) comme objet détecté étant la position d'un moteur (22) et/ou d'au moins une batterie (23).

17. Procédé selon la revendication 16,
**caractérisé en ce que**
une autre des propriétés d'objet est une orientation d'objet.
